# EUROPÄISCHE PATENTANMELDUNG

(11) **EP 4 371 721 A1**
(43) Veröffentlichungstag der Anmeldung: **22.05.2024**
(21) Anmeldenummer: 23198737.1
(22) Anmeldetag: 21.09.2023
(51) Int. Cl.: B28D 1/14, B23B 51/04, B25D 17/02, B28D 1/04

(54) **BOHRKRONE FÜR EINEN DREH-LOCH-EINSATZ ZUM DURCHTRENNEN VON ARMIERUNGSSTANGEN IN BETON**

(30) Priorität: 03.11.2022 DE 102022129091
(71) Anmelder: Heller Tools GmbH, 49413 Dinklage (DE)
(72) Erfinder: Lampe, Rainer, 49413 Dinklage (DE); Thiel, Torsten, 49610 Quakenbrück (DE); Hoff, Guido, 49453 Wetschen (DE)
(74) Vertreter: Gottschald Patentanwälte Partnerschaft mbB

(57) **Zusammenfassung**

Bohrkrone für einen dreh-hämmernden oder drehschlagenden Einsatz zum Durchtrennen von Armierungseisen (2) in Beton, wobei die Bohrkrone (1) einen im Wesentlichen hohlzylindrischen Tragkörper (4), der sich entlang einer geometrischen Bohrkronenachse (A) erstreckt, aufweist, wobei der Tragkörper (4) wenigstens einen Meißelzahn (6) mit einer sich im Wesentlichen radial erstreckenden ersten Meißelkante (7) aufweist. Die erste Meißelkante (7) ist in Umfangsrichtung (U) in einem mittleren Abschnitt, insbesondere genau mittig, des Meißelzahns (6) angeordnet, und der Meißelzahn (6) weist eine sich im Wesentlichen tangential zur Umfangsrichtung (U) der Bohrkrone (1) erstreckende zweite Meißelkante (8) auf.

## Beschreibung

Die vorliegende Erfindung betrifft eine Bohrkrone für einen dreh-hämmernden oder dreh-schlagenden Einsatz zum Durchtrennen von Armierungseisen in Beton, gemäß dem Oberbegriff von Anspruch 1.

Häufig muss armierter Beton mit Löchern versehen werden, beispielsweise zu Befestigungszwecken. Dafür wird zunächst mit einem Gesteins- oder Betonbohrer ein Loch in den Beton gebohrt. Stößt man dabei auf ein Armierungseisen, ist die Verwendung einer vorschlagsgemäßen Bohrkrone notwendig, um das Armierungseisen durchzutrennen. Dabei erfolgt die Durchtrennung mittels eines dreh-hämmernden oder dreh-schlagenden Einsatzes der Bohrkrone. Sobald das Armierungseisen durchtrennt ist, kann mit dem zuvor verwendeten Gesteins- oder Betonbohrer weitergebohrt werden.

Der bekannte Stand der Technik (DE 198 10 775 A1), von dem die Erfindung ausgeht, betrifft eine Bohrkrone für einen hämmernden oder schlagenden Einsatz zum Durchtrennen von Armierungseisen in Beton. Die Bohrkrone weist einen Schaftabschnitt und einem am Schaftabschnitt angebundenen Tragkörper auf, der sich hohlzylindrisch entlang einer geometrischen Bohrkronenachse erstreckt. Die Bohrkrone weist einen Meißelzahn mit einer im Wesentlichen sich radial erstreckenden Meißelkante auf. Die Meißelkante ist dabei in Umfangsrichtung im vorderen Drittel des Meißelzahns angeordnet und definiert eine Meißelzahngerade, welche windschief zur Bohrkronenachse angeordnet ist.

Es ist dabei eine Herausforderung, dass das Durchtrennen des Armierungseisens einen großen Zeitaufwand erfordert. Aufgrund der Ausbildung des Meißelzahns kann beim hämmernden oder schlagenden Einsatz eine der Drehrichtung entgegengesetzte Kraft erzeugt werden, die der Drehung der Bohrkrone entgegenwirkt, wodurch das Durchtrennen des Armierungseisens ungleichmäßig erfolgt und die Drehbewegung der Bohrkrone behindert wird.

Der Erfindung liegt das Problem zugrunde, die bekannte Bohrkrone derart auszugestalten und weiterzubilden, dass ein schnelles und kostengünstiges Durchtrennen von Armierungseisen in Beton ermöglicht wird.

Das obige Problem wird durch die Merkmale des kennzeichnenden Teils von Anspruch 1 gelöst.

Wesentlich ist die grundsätzliche Überlegung, den Meißelzahn in radialer Richtung und in Drehrichtung beim Durchtrennen von Armierungseisen gleichmäßig zu belasten, sodass keine oder lediglich eine verringerte Kraft entgegen der Drehrichtung der Bohrkrone erzeugt wird. Es hat sich gezeigt, dass eine zunächst punktuelle Belastung des Meißelzahns und eine anschließende gleichmäßige Belastung in axialer und tangentialer Richtung ein gleichmäßiges und effizientes Durchtrennen von Armierungseisen in kurzer Zeit ermöglicht. Es ist auf diese Weise möglich, den Verschleiß der Bohrkrone und insbesondere des Meißelzahns zu verringern, wodurch eine lange Lebensdauer der Bohrkrone erzielt werden kann. Durch die gleichmäßige Belastung ist auch weniger Energie zum Durchtrennen der Armierungseisen notwendig.

Im Einzelnen wird vorgeschlagen, dass die erste Meißelkante in Umfangsrichtung in einem mittleren Abschnitt, insbesondere genau mittig, des Meißelzahns angeordnet ist und dass der Meißelzahn eine sich im Wesentlichen tangential zur Umfangsrichtung der Bohrkrone erstreckende zweite Meißelkante aufweist.

Die Ausgestaltungen gemäß der Ansprüche 2 und 3 betreffen bevorzugte Anordnungen der ersten und zweiten Meißelkante, um ein besonders gleichmäßiges Durchtrennen von Armierungseisen zu ermöglichen.

Die Ansprüche 4 und 5 betreffen bevorzugte Ausgestaltungen der Winkel zwischen den sich beidseitig an die erste und die zweite Meißelkante anschließenden Meißelflächen und/oder Abschnitte der ersten bzw. zweiten Meißelkante, wodurch das Durchtrennen von Armierungseisen in besonders kurzer Zeit erfolgen kann.

Nach der Ausgestaltung gemäß Anspruch 6 ist ein im Wesentlichen kontinuierlicher Übergang von den Meißelflächen zu einer senkrecht zur geometrischen Bohrkronenachse angeordneten Trägerstirnfläche des Tragkörpers, gegenüber der der Meißelzahn axial hervorsteht, in und entgegen der Drehrichtung vorgesehen, wodurch eine gleichmäßige Drehung der Bohrkrone auch dann ermöglicht wird, wenn Grat im Bereich zwischen der Trägerstirnfläche und den Meißelkanten auf den Meißelzahn trifft.

Gemäß Anspruch 7 weist der Meißelzahn in axialer Richtung im Bereich des Zusammentreffens der beiden Meißelkanten einen Überstand gegenüber der Trägerstirnfläche von 1 mm bis 4 mm auf, wodurch ein besonders effizientes Durchtrennen von Armierungseisen in Beton ermöglicht wird.

Nach der weiteren Ausgestaltung gemäß Anspruch 8 weist der Meißelzahn eine Quererstreckung in Richtung der ersten Meißelkante auf. Die Quererstreckung ist dabei entlang der zweiten Meißelkante variabel ausgebildet, wobei die größte Quererstreckung in Umfangsrichtung von der Vorderflanke des Meißelzahns beabstandet ist. Es hat sich gezeigt, dass durch eine Verlagerung der größten Quererstreckung entfernt von der Vorderflanke eine Beschädigung des Meißelzahns im Bereich der größten Quererstreckung wirkungsvoll verhindert werden kann, wodurch die Lebensdauer der Bohrkrone ansteigt.

Gemäß Anspruch 9 überragt der Meißelzahn den Trägerkörper in radialer Richtung wenigstens einseitig, wodurch die Reibung zwischen dem Trägerkörper und dem Beton verringert werden kann.

Nach der bevorzugten Ausgestaltung gemäß Anspruch 10 verringert sich die Quererstreckung des Meißelzahns ausgehend von der größten Quererstreckung zu der Vorderkante und/oder der Hinterflanke.

Gemäß Anspruch 11 weist der Meißelzahn in radialer Richtung eine Zahninnenseite und eine von der Zahninnenseite abgewandte Zahnaußenseite auf. Der Abstand zwischen der Zahninnenseite und der Zahnaußenseite verringert sich zu einem Fußabschnitt des Meißelzahns hin, wodurch die Reibung zwischen dem Trägerkörper und dem Armierungseisen und dem das Armierungseisen umgebende Beton weiter verringert werden kann.

Nach der bevorzugten Ausgestaltung gemäß Anspruch 12 ist der Meißelzahn in einer Montagebewegung in eine Zahnaufnahme des Tragkörpers einsteckbar, wodurch eine besonders einfach durchzuführende Montage des Meißelzahns ermöglicht wird, die insbesondere auch automatisiert ablaufen kann.

Nach der weiteren Ausgestaltung gemäß Anspruch 13 weist der Meißelzahn eine den Meißelflächen abgewandte Auflagefläche auf, die im montierten Zustand der Bohrkrone mit einer komplementären Auflagegegenfläche in Eingriff steht, wodurch eine einseitige axiale Abstützung des Meißelzahns geschaffen wird. Nach der besonders bevorzugten Ausgestaltung gemäß Anspruch 14 weist der Meißelzahn wenigstens ein Formschlusselement auf. Das Formschlusselement ist derart in formschlüssigen Eingriff mit einem Gegenformschlusselement des Tragkörpers gebracht, dass der Meißelzahn in radialer Richtung am Tragkörper fixiert ist. Eine besonders genaue Positionierung kann erreicht werden, wenn der Meißelzahn zwei Formschlusselemente und der Tragkörper zwei Gegenformschlusselemente aufweist (Anspruch 15). Es ist dabei besonders vorteilhaft für eine gleichmäßige Fixierung in axialer Richtung, wenn jeweils ein Formschlusselement im Bereich der Vorderflanke und im Bereich der Hinterflanke angeordnet ist.

Die Zahnausnehmung ist gemäß Anspruch 16 in vorteilhafter Weise spanend in die Bohrkrone eingebracht.

Nach der weiteren Ausgestaltung gemäß Anspruch 17 weist die Bohrkrone an ihrem Außenumfang eine tangentiale Kontrollfläche auf, welche die Zahnausnehmung wenigstens abschnittsweise in radialer Richtung begrenzt. Mithilfe der Kontrollfläche kann eine genaue Lagebestimmung des Meißelzahns erfolgen.

Um eine gute Verbindung zwischen dem Meißelzahn und der Bohrkrone zu erzeugen sind die beiden Komponenten gemäß Anspruch 18 miteinander verlötet.

Anspruch 19 betrifft besonders bevorzugte geometrische Ausgestaltungen des Bohrkronendurchmessers.

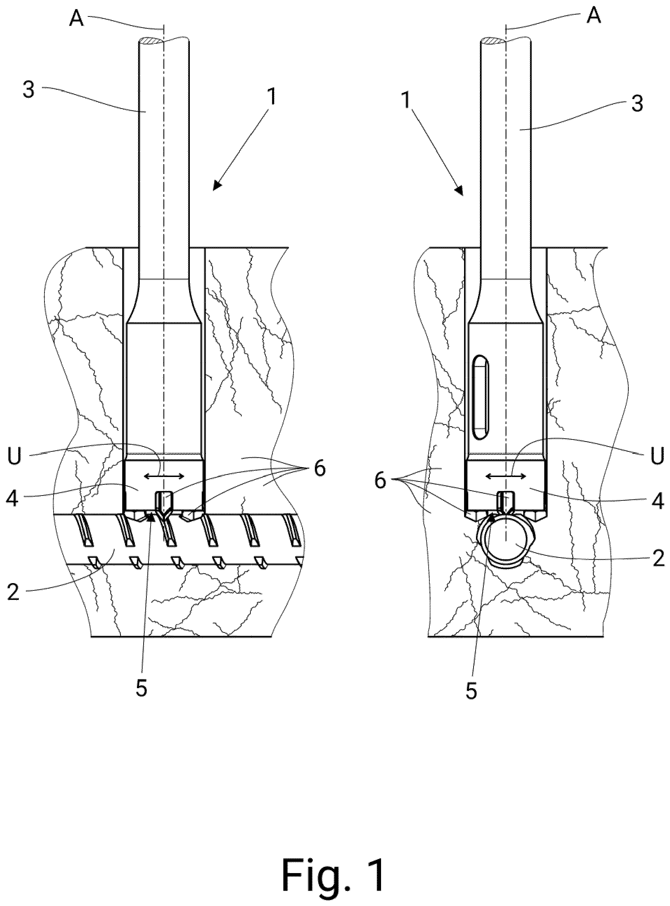

Im Folgenden wird die Erfindung anhand einer lediglich Ausführungsbeispiele darstellenden Zeichnung näher erläutert. In der Zeichnung zeigt
- Fig. 1: eine Ansicht einer erfindungsgemäßen Bohrkrone von zwei Seiten,
- Fig. 2: eine Detailansicht des Tragkörpers der Bohrkrone aus Fig. 1 und eine teilfreigeschnittene Ansicht des Tragkörpers aus Fig. 1 mit zwei Meißelzähnen,
- Fig. 3: eine Ansicht des Tragkörpers aus Fig. 1 von unten mit vier Meißelzähnen sowie eine Detailansicht eines Meißelzahns von unten und
- Fig. 4: eine perspektivische Ansicht des Tragkörpers mit vier Meißelzähnen und einer Detailansicht eines Meißelzahns in a) einer ersten Ausführungsform, b) einer zweiten Ausführungsform, c) einer dritten Ausführungsform und d) einer vierten Ausführungsform.

In den Zeichnungen ist eine erfindungsgemäße Bohrkrone 1 für einen hämmernden oder schlagenden Einsatz zum Durchtrennen von Armierungseisen 2 in Beton dargestellt. Bei einem dreh-hämmernden oder dreh-schlagenden Einsatz der Bohrkrone 1 können Drehzahlen von 100 bis 1500 Umdrehungen pro Minute und Schlagzahlen 1000 bis 5000 pro Minute erreicht werden.

Die Bohrkrone 1 weist einen Schaftabschnitt 3 und einen am Schaftabschnitt 3 ausgebildeten Tragkörper 4 auf. Wie in den Figuren gezeigt, ist der Tragkörper 4 im Wesentlichen hohlzylindrisch ausgebildet. Der Schaftabschnitt 3 und der Tragkörper 4 müssen nicht zwingend einteilig ausgebildet sein. Aus Gründen der Krafteinleitung vom Schaftabschnitt 3 in den Tragkörper 4 ist jedoch eine einstückige Ausbildung des Tragkörpers 4 am Schaftabschnitt 3 eher der Normalfall.

Die Bohrkrone 1 weist eine geometrische Bohrkronenachse A auf, entlang derer sich der hohlzylindrische Tragkörper 4 in axialer Richtung erstreckt. Der Begriff "axial" ist vorliegend auf die geometrische Bohrkronenachse A bezogen. Ebenso sind die Begriffe "radial" und "Umfangsrichtung" vorliegend ebenfalls auf die geometrische Bohrkronenachse A bezogen.

In Umfangsrichtung U ist an einer radialen Stirnseite 5 des Tragkörpers 4 wenigstens ein Meißelzahn 6 angeordnet. In der in den Figuren gezeigten und insoweit bevorzugten Ausführungsform weist der Tragkörper 4 vier Meißelzähne 6 auf. Es ist jedoch auch möglich, mehr oder weniger als vier Meißelzähne 6 vorzusehen.

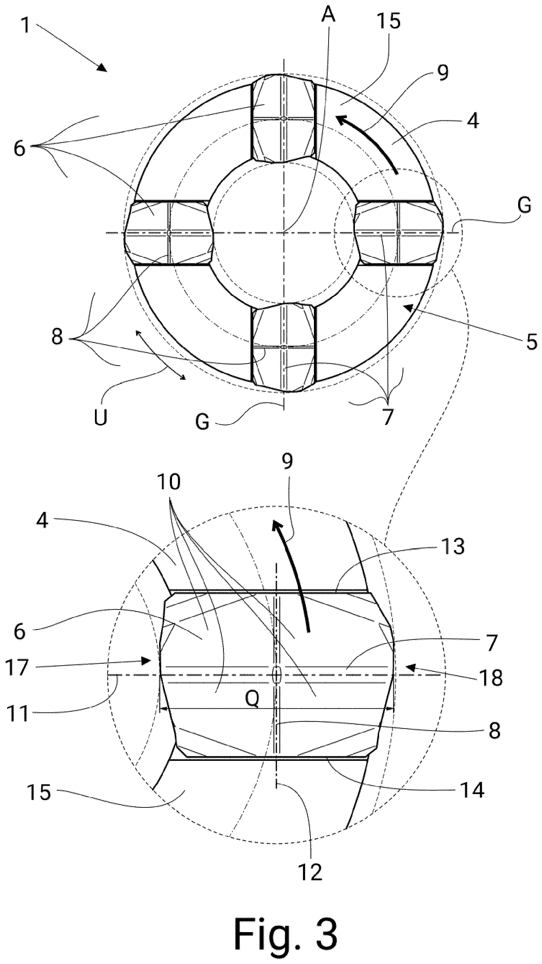

Wie beispielsweise in Fig. 3 gezeigt ist, weist der Meißelzahn 6 eine sich im Wesentlichen in radialer Richtung erstreckende erste Meißelkante 7 auf. Der Begriff "in radialer Richtung" ist vorliegend auf die geometrische Bohrkronenachse A bezogen. Folglich bezieht sich der Begriff "in radialer Richtung" auf einen Zustand, in dem der Meißelzahn 6 an dem Tragkörper 4 fixiert ist. Unter dem Begriff "fixiert" ist vorliegend axial- und radialfest zu verstehen und umfasst, eine form-, stoff- und/oder kraftschlüssige Verbindung zwischen dem Meißelzahn 6 und dem Tragkörper 4. Es ist auch möglich, dass der Tragkörper 4 und der Meißelzahn 6 einstückig miteinander ausgebildet sind.

Die erste Meißelkante 7 ist, wie in den Figuren gezeigt, in Umfangsrichtung U mittig des Meißelzahns 6 angeordnet, wodurch sich in Umfangsrichtung U eine gleichmäßige Geometrie erreichen lässt, wie nachfolgend noch im Einzelnen erläutert wird.

Wesentlich ist nun, dass die erste Meißelkante 7 in Umfangsrichtung U in einem mittleren Abschnitt, insbesondere genau mittig, des Meißelzahns 6 angeordnet ist und dass der Meißelzahn 6 eine sich im Wesentlichen tangential zur Umfangsrichtung U der Bohrkrone 1 erstreckende zweite Meißelkante 8 aufweist. Unter dem Begriff "in einem mittleren Abschnitt des Meißelzahns" ist vorliegend auf die Umfangsrichtung U bezogen das mittige Drittel oder Fünftel des Meißelzahns 6 zu verstehen. Der Meißelzahn 6 weist somit insgesamt zwei Meißelkanten 7, 8 auf, die bei einem hämmernden oder schlagenden Einsatz zum Durchtrennen von Armierungseisen 2 in Beton mit dem Armierungseisen 2 in Kontakt treten und meißelnd das Armierungseisen 2 bearbeiten. Es hat sich gezeigt, dass durch eine mittige Anordnung der ersten Meißelkante 7 in Kombination mit einer zweiten Meißelkante 8 bei einem hämmernden oder schlagenden Einsatz ein besonders gleichmäßiges und effizientes Durchtrennen des Armierungseisens 2 ermöglicht wird. Durch die Ausbildung von insgesamt zwei Meißelkanten 7, 8 bestehen die erste Meißelkante 7 und die zweite Meißelkante 8 jeweils aus zwei Abschnitten, die nicht kollinear zueinander angeordnet sind. Auf diese Weise wird am Schnittpunkt der beiden Meißelkanten 7, 8 eine Meißelspitze gebildet, welche das Eindringen in das Armierungseisen 2 vereinfacht.

Das Durchtrennen des Armierungseisens 2 kann weiter verbessert werden, wenn die zweite Meißelkante 8 in radialer Richtung in einem mittleren Abschnitt, insbesondere genau mittig, des Meißelzahns 6 angeordnet ist. Bezüglich des Begriffs "in einem mittleren Abschnitt" darf auf die vorausgehende Definition verwiesen werden. Es hat sich gezeigt, dass durch eine jeweils mittige Anordnung der ersten Meißelkante 7 und der zweiten Meißelkante 8 bei einem hämmernden oder schlagenden Einsatz entgegen der Drehrichtung 9 der Bohrkrone 1 erzeugte Kräfte verringert werden können, wodurch ein besonders gleichmäßiges und effizientes Durchtrennen des Armierungseisens 2 ermöglicht wird.

Wie in Fig. 3 gezeigt und insofern bevorzugt ist, definiert die erste Meißelkante 7 eine Meißelkantengerade G, die durch die geometrische Bohrkronenachse A verläuft. Die erste Meißelkante 7 ist dann radial bezogen auf die geometrische Bohrkronenachse A angeordnet. Durch diese Anordnung wird bei einem hämmernden oder schlagenden Einsatz durch die erste Meißelkante 7 im Wesentlichen keine Kraft entgegen der Drehrichtung 9 der Bohrkrone 1 erzeugt, wodurch das Durchtrennen besonders effizient erfolgen kann.

Wie in den Figuren gezeigt ist, schneiden sich die erste Meißelkante 7 und die zweite Meißelkante 8 und sind senkrecht zueinander ausgebildet.

Für ein schnelles und gleichmäßiges Durchtrennen des Armierungseisens 2 ist eine hohe Effizienz erforderlich. Die Effizienz kann gesteigert werden, dass die sich beidseitig an die erste Meißelkante 7 unmittelbar anschließenden Meißelflächen 10 und/oder Abschnitte der zweiten Meißelkante 8 zu einer sich durch die erste Meißelkante 7 und die geometrische Bohrkronenachse A erstreckenden ersten Meißelebene 11 jeweils einen Winkel in einer orthogonal zur ersten Mei-βelebene 11 angeordneten Ebene von 30° bis 45°, vorzugsweise von 35° bis 42,5°, weiter vorzugsweise von 37,5° bis 40°, ausbilden. Der Winkel ist dabei in einer orthogonal zur ersten Meißelebene 11 angeordneten Ebene gemessen. Durch die Ausgestaltung des Meißelzahns 6 mit der ersten Meißelkante 7 und der zweiten Meißelkante 8 ergeben sich insgesamt vier Meißelflächen 10.

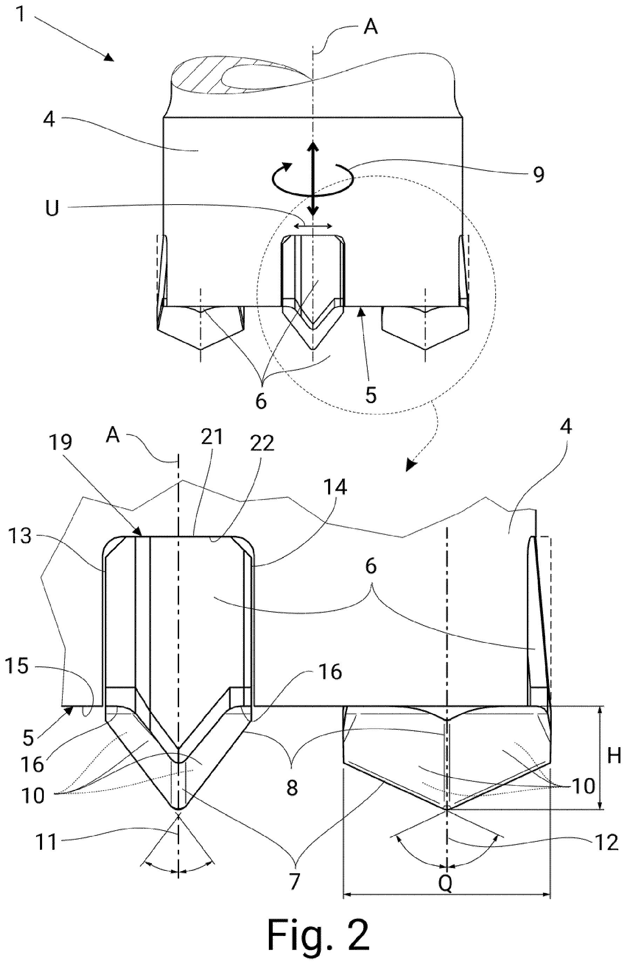

Es ist dabei besonders vorteilhaft, wenn die Winkel zwischen den Meißelflächen 10 und der ersten Meißelebene 11 jeweils identisch sind, wie in Fig. 2 gezeigt ist. Auf diese Weise sind die beim hämmernden oder schlagenden Einsatz durch die erste Meißelkante 7 in Drehrichtung 9 der Bohrkrone 1 erzeugten Kräfte identisch zu den von der ersten Meißelkante 7 erzeugten Kräfte entgegen der Drehrichtung 9. Die Kräfte in und entgegen der Drehrichtung 9 der Bohrkrone 1 gleichen sich auf diese Weise aus, wodurch das Durchtrennen des Armierungseisens 2 besonders gleichmäßig und effizient erfolgen kann.

Weiter ist hier und vorzugsweise vorgesehen, dass die sich beidseitig an die zweite Meißelkante 8 unmittelbar anschließenden Meißelflächen 10 und/oder Abschnitte der ersten Meißelkante 7 zu einer sich durch die zweite Meißelkante 8 und parallel zur geometrische Bohrkronenachse A erstreckende zweite Meißelebene 12 jeweils einen Winkel in einer orthogonal zur zweiten Meißelebene 12 angeordneten Ebene von 50° bis 75°, vorzugsweise von 55° bis 70°, weiter vorzugsweise von 60° bis 65°, ausbilden. Es hat sich gezeigt, dass mit den vorgenannten Winkeln zwischen den Meißelflächen 10 und der ersten Meißelebene 11 und der zweiten Meißelebene 12 besonders gute Ergebnisse beim Durchtrennen von Armierungseisen 2 erzielt werden können.

Die erste Meißelebene 11 schneidet hier und vorzugsweise die zweite Meißelebene 12 in einem rechten Winkel, wie in Fig. 3 gezeigt ist.

In der in den Figuren gezeigten und insoweit bevorzugten Ausführungsform ist vorgesehen, dass der Meißelzahn 6 eine sich im Wesentlichen parallel zur ersten Meißelebene 11 erstreckende, in Drehrichtung 9 der Bohrkrone 1 vorne angeordnete Vorderflanke 13 und eine sich im Wesentlichen parallel zur ersten Meißelebene 11 erstreckende, in Drehrichtung 9 der Bohrkrone 1 hinten angeordnete Hinterflanke 14 aufweist, dass der Tragkörper 4 eine im Wesentlichen senkrecht zur geometrischen Bohrkronenachse A angeordnete Trägerstirnfläche 15, gegenüber der der Meißelzahn 6 axial hervorsteht, aufweist, dass die Meißelflächen 10 in Drehrichtung 9 im Bereich der Vorderflanke 13 des Meißelzahns 6 und in Drehrichtung 9 im Bereich der Hinterflanke 14 des Meißelzahns 6 jeweils eine Abflachung 16 aufweisen, in der die Meißelflächen 10 derart abgeflacht sind, dass ein im Wesentlichen kontinuierlicher Übergang von den Meißelflächen 10 zur Trägerstirnfläche 15 ausgebildet ist.

Auf diese Weise kann ein Verhaken des Meißelzahns 6 bei einer Drehbewegung der Bohrkrone 1 beim Durchtrennen des Armierungseisens 2, beispielsweise mit hervorstehendem Grat, verhindert werden. Material kann dann auf einfache Weise über die Meißelflächen 10 befördert werden, ohne die Drehbewegung der Bohrkrone 1 zu behindern.

Wie Fig. 2 zeigt, ist hier und vorzugsweise vorgesehen, dass die Vorderflanke 13 und die Hinterflanke 14 in axialer Richtung die Trägerstirnfläche 15 im Wesentlichen nicht in Richtung zur ersten Meißelkante 7 überragen.

Durch die parallele Anordnung der Vorderflanke 13 und der Hinterflanke 14 zur ersten Meißelebene 11 ergibt sich eine im Wesentlichen konstante Länge des Meißelzahns 6. Der Begriff "Länge des Meißelzahns" ist vorliegend auf die Richtung entlang der zweiten Meißelkante 8 und quer zur ersten Meißelkante 7 bezogen.

Der Meißelzahn 6 kann besonders stabil ausgebildet werden, wenn der Meißelzahn 6 des Zusammentreffens der ersten Meißelkante 7 und der zweiten Meißelkante 8 einen axialen Überstand H gegenüber der Trägerstirnfläche 15 von 1 mm bis 4 mm, vorzugsweise von 1,5 mm bis 3,5 mm, weiter vorzugsweise von 2 mm bis 3 mm, aufweist. Unter dem Begriff "im Bereich des Zusammentreffens" ist vorliegend der Schnittpunkt zwischen der ersten Meißelkante 7 und der zweiten Meißelkante 8 zu verstehen. Es hat sich gezeigt, dass mit entsprechenden Überständen H ein besonders effizientes Durchtrennen von Armierungseisen 2 in Beton erzielt werden kann.

Wie in den Figuren gezeigt und insoweit bevorzugt ist, wird der Überstand H nur durch die Meißelflächen 10 abgedeckt. Die Meißelflächen 10 bilden mit der Trägerstirnfläche 15 einen stetigen Übergang und enden in axialer Richtung nicht darüber oder tauchen auch nicht in axialer Richtung in die Trägerstirnfläche 15 ein. Es ist alternativ aber auch denkbar, dass der Überstand H derart ausgebildet ist, dass die Meißelflächen 10 keinen stetigen Übergang zur Trägerstirnfläche 15 ausbilden.

Um ein gleichmäßiges Durchtrennen des Armierungseisens 2 gewährleisten zu können, ist es wichtig, Beschädigungen des Meißelzahns 6 zu verhindern und die Lebensdauer so zu verbessern. Die Lebensdauer des Meißelzahns 6 kann verbessert werden, wenn der Meißelzahn 6 eine Quererstreckung Q in Richtung der ersten Meißelkante 7 aufweist, wenn die Quererstreckung Q entlang der zweiten Meißelkante 8 variabel ist, und wenn der Meißelzahn 6 seine größte Quererstreckung Q beabstandet von der Vorderflanke 13 aufweist. Auf diese Weise wird die Vorderflanke 13 weniger stark belastet. Gleichzeitig wird verhindert, dass der Meißelzahn 6 im Bereich der maximalen Quererstreckung Q beschädigt wird.

Die Wahrscheinlichkeit einer Beschädigung des Meißelzahns 6 kann weiter verringert werden, wenn der Meißelzahn 6 seine größte Quererstreckung Q zwischen der ersten Meißelkante 7 und der Vorderflanke 13 aufweist. In der in den Figuren gezeigten und insoweit bevorzugten Ausführungsform ist vorgesehen, dass die größte Quererstreckung Q einen ersten Abstand zur Vorderflanke 13 und einen zweiten Abstand zur ersten Meißelkante 7 aufweist und dass das Verhältnis des ersten Abstandes zum zweiten Abstand von 1:1 bis 1:8, vorzugsweise von 1:2 bis 1:7, weiter vorzugsweise von 1:3 bis 1:5, beträgt.

Weiter ist hier und vorzugsweise vorgesehen, dass der Meißelzahn 6 den Tragkörper 4 wenigstens abschnittsweise im Bereich der größten Quererstreckung Q radial nach Innen und/oder radial nach außen überragt. Auf diese Weise kann die Reibung zwischen der Bohrkrone 1 und dem Armierungseisen 2 und dem das Armierungseisen 2 umgebenden Beton verringert werden.

Es ist dabei besonders vorteilhaft, wenn die Vorderflanke 13 und/oder die Hinterflanke 14 in radialer Richtung den Tragkörper 4 nicht überragt, wie in Fig. 3 gezeigt ist. Auf diese Weise wird ein gleichmäßiger Übergang in radialer Richtung ausgehend vom Tragkörper 4 zum Meißelzahn 6 geschaffen, wodurch Beschädigungen des Meißelzahns 6 weiter verhindert werden können. Es ist jedoch auch möglich, dass die Vorderflanke 13 und/oder die Hinterflanke 14 den Tragkörper 4 in radialer Richtung einseitig oder beidseitig überragt.

Die Quererstreckung Q kann sich entlang der zweiten Meißelkante 8 auf verschiedene Weise zur Vorderflanke 13 und/oder zur Hinterflanke 14 verringern. Hier und vorzugsweise, entspricht die Quererstreckung Q im Bereich der Vorderflanke 13 und/oder die Quererstreckung Q im Bereich der Hinterflanke 14 von 98 % bis 85 % der größten Quererstreckung Q, vorzugsweise von 96 % bis 80 %, weiter vorzugsweise von 94 % bis 85 %. Die Verringerung der Quererstreckung Q kann auf beiden Seiten der ersten Meißelkante 7 identisch erfolgen oder unterschiedlich ausgeprägt sein.

Wie in Fig. 3 gezeigt ist, ist vorzugsweise vorgesehen, dass sich die Quererstreckung Q des Meißelzahns 6 ausgehend von der größten Quererstreckung Q entlang der zweiten Meißelkante 8 zu der Vorderflanke 13 und der Hinterflanke 14 verringert, wodurch die Reibung beim Betrieb der Bohrkrone 1 weiter verringert werden kann. Hier und vorzugsweise entspricht die Quererstreckung Q im Bereich der Vorderflanke 13 und/oder die Quererstreckung Q im Bereich der Hinterflanke 14 von 98 % bis 85 % der größten Quererstreckung Q, vorzugsweise von 96 % bis 80 %, weiter vorzugsweise von 94 % bis 85 %.

In der in Fig. 2 in durchgezogenen Linien dargestellten und insoweit bevorzugten Ausführungsform ist vorgesehen, dass der Meißelzahn 6 eine in radialer Richtung der geometrischen Bohrkronenachse A zugewandte Zahninnenseite 17 und eine in radialer Richtung der geometrischen Bohrkronenachse A abgewandte Zahnaußenseite 18 aufweist, und dass sich der Abstand zwischen der Zahninnenseite 17 und der Zahnaußenseite 18 ausgehend von der ersten Meißelkante 7 in axialer Richtung zu einer Fußseite 19 des Meißelzahns 6 verringert. Hingegen ist in der in Fig. 2 in gestrichelten Linien dargestellten und insoweit bevorzugten zweiten Ausführungsform vorgesehen, dass der Abstand zwischen der Zahninnenseite 17 und der Zahnaußenseite 18 ausgehend von der ersten Meißelkante 7 in axialer Richtung zu einer der Meißelkante abgewandten Fußseite 19 des Meißelzahns 6 im Wesentlichen konstant bleibt.

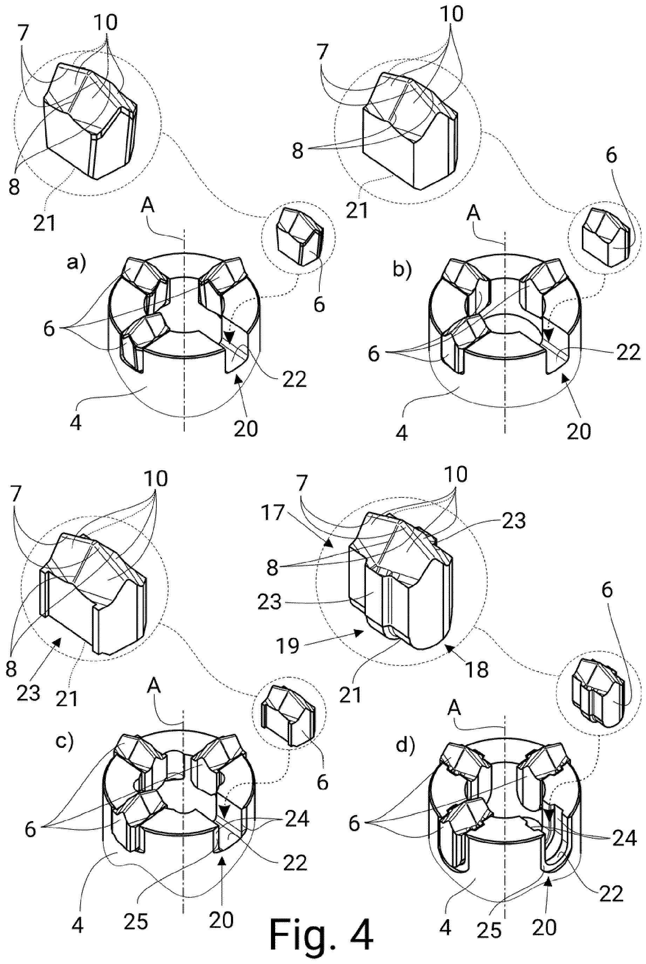

Die Herstellung der Bohrkrone 1 kann in besonders einfacher Weise erfolgen, wenn im Rahmen einer Montage der Bohrkrone 1 der Meißelzahn 6 in einer Montagebewegung in eine Zahnaufnahme 20 des Tragkörpers 4, insbesondere in axialer Richtung, einsteckbar ist. Auf diese Weise lässt sich die Montage der Bohrkrone 1 in der Zahnaufnahme 20 mit besonders einfachen Bewegungen umsetzen, wenn die Montage im Wesentlichen auf eine Montage des Meißelzahns 6 zurückgeht. Eine solche Bewegung lässt sich zudem leicht automatisiert realisieren. Es ist alternativ oder zusätzlich denkbar, dass die Montagebewegung in radialer Richtung erfolgt. So ist es bei der in Fig. 4a) gezeigten Ausführungsform und der in Fig. 4b) gezeigten Ausführungsform möglich, dass die Montagebewegung in radialer und/oder in axialer Richtung erfolgt.

Es ist des Weiteren vorgesehen, dass der Meißelzahn 6 wenigstens eine der ersten Meißelkante 7 und der zweiten Meißelkante 8 abgewandte Auflagefläche 21 aufweist, die im montierten Zustand der Bohrkrone 1 mit einer komplementär ausgebildeten Gegenauflagefläche 22 des Tragkörpers 4 in Eingriff steht. Wie in den Figuren gezeigt ist, ist die Auflagefläche 21 an der Fußseite 19 des Meißelzahns 6 angeordnet. Auf diese Weise wird eine axialfeste Verbindung zwischen dem Meißelzahn 6 und dem Tragkörper 4 in Richtung des Schaftabschnitts 3 geschaffen. Die Gegenauflagefläche 22 begrenzt somit die Zahnaufnahme 20 einseitig in axialer Richtung. In den in Fig. 4a), Fig. 4b) und Fig. 4c) gezeigten und insoweit bevorzugten Ausführungsformen ist vorgesehen, dass die Auflagefläche 21 flach ausgebildet ist.

Die Auflagefläche 21 kann auch mehrere Teilflächen aufweisen, wie in Fig. 4d) gezeigt und insoweit bevorzugt ist.

In der in Fig. 4d) gezeigten und insoweit bevorzugten Ausführungsform ist die Auflagefläche 21 hingegen konvex ausgebildet. Es ist dabei besonders vorteilhaft, wenn die Auflagefläche 21 im Wesentlichen halbkreisförmig ausgebildet ist. Die Gegenauflagefläche 22 ist dann entsprechend konkav ausgebildet.

In der in Fig. 4c) gezeigten und insoweit bevorzugten Ausführungsform und in der in Fig. 4d) gezeigten und insoweit bevorzugten Ausführungsform ist jeweils vorzugsweise vorgesehen, dass der Meißelzahn 6 wenigstens ein Formschlusselement 23 aufweist, das derart mit einem Gegenformschlusselement 24 des Tragkörpers 4 in formschlüssigen Eingriff gebracht ist, dass der Meißelzahn 6 radialfest am Tragkörper 4 gehalten ist. Es ist dann möglich, durch das Einbringen des Meißelzahns 6 in die Zahnaufnahme 20 eine radialfeste Verbindung zwischen dem Meißelzahn 6 und dem Tragkörper 4 zu erzeugen. Die Positionierung des Meißelzahns 6 relativ zum Tragkörper 4 kann dann in besonders einfacher Weise erfolgen.

In der in Fig. 4c) gezeigten Ausführungsform weist der Meißelzahn 6 genau ein Formschlusselement 23 in Form einer Nut an der Hinterflanke 14 auf. Das Gegenformschlusselement 24 wird durch einen komplementären Vorsprung im Tragkörper 4 gebildet.

Dagegen ist bei der in Fig. 4d) gezeigten und insoweit bevorzugten Ausführungsform vorgesehen, dass der Meißelzahn 6 zwei Formschlusselemente 23 aufweist, die jeweils derart mit einem Gegenformschlusselement 24 des Tragkörpers 4 in formschlüssigen Eingriff gebracht sind, dass der Meißelzahn 6 radialfest am Tragkörper 4 gehalten ist. Wie in Fig. 4d) des Weiteren gezeigt ist, ist hier und vorzugsweise vorgesehen, dass jeweils ein Formschlusselement 23 im Bereich der Vorderflanke 13 und im Bereich der Hinterflanke 14 des Meißelzahns 6 angeordnet ist. Auf diese Weise kann eine gleichmäßige Belastung des Meißelzahns 6 in radialer Richtung sichergestellt werden.

Zur besonders einfachen Herstellung der Bohrkrone 1 ist vorzugsweise vorgesehen, dass die Zahnaufnahme 20 mittels eines spanenden Verfahrens in die Bohrkrone 1 einbringbar ist. Eine spanende Bearbeitung ist besonders kostengünstig und schnell realisierbar. Hier und vorzugsweise ist die Zahnaufnahme 20 mittels Fräsen in die Bohrkrone 1 eingebracht ist, wodurch eine in hohem Maße automatisierbare Bearbeitung ermöglicht wird. Es ist dabei möglich, dass das Einbringen der Zahnaufnahme 20 in die Bohrkrone 1 im Wesentlichen in radialer und/oder in axialer Richtung erfolgt.

So ist in den in Fig. 4a), Fig. 4b) und Fig. 4c) gezeigten und insofern bevorzugten Ausführungsformen vorgesehen, dass die Zahnaufnahme 20 im Wesentlichen durch eine fräsende Bearbeitung des Tragkörpers 4 in radialer Richtung erfolgt ist. Bei der in Fig. 4d) gezeigten und insoweit bevorzugten Ausführungsform ist hingegen vorgesehen, dass die Zahnaufnahme 20 im Wesentlichen durch eine fräsende Bearbeitung des Tragkörpers 4 in axialer Richtung erfolgt.

Wie in den Figuren gezeigt und insoweit bevorzugt ist, ist die Zahnaufnahme 20 wenigstens abschnittsweise komplementär zum Meißelzahn 6 ausgebildet, wodurch eine besonders genaue Positionierung des Meißelzahns 6 relativ zum Tragkörper 4 erzielt wird.

Des Weiteren ist in der in Fig. 4c) gezeigten und insoweit bevorzugten Ausführungsform und in der in Fig. 4d) gezeigten und insoweit bevorzugten Ausführungsform vorgesehen, dass die Bohrkrone 1 an ihrem Außenumfang eine tangentiale Kontrollfläche 25 aufweist, und dass die Kontrollfläche 25 die Zahnaufnahme 20 wenigstens abschnittsweise in radialer Richtung begrenzt. Die Kontrollfläche 25 dient dabei als Referenz zur Lagebestimmung der Zahnaufnahme 20 und/oder des Meißelzahns 6.

Weiter ist hier und vorzugsweise vorgesehen, dass der Meißelzahn 6 mit dem Tragkörper 4 zur Herstellung der Bohrkrone 1 verlötet ist, insbesondere mittels Silberlöten und/oder Kupferlöten. Es kann somit auf einfache und kostengünstige Weise ein stoffschlüssiger Eingriff zwischen dem Meißelzahn 6 und der Bohrkrone 1 erzeugt werden.

Es ist besonders vorteilhaft, wenn die Bohrkrone 1 einen Durchmesser von 10 mm bis 60 mm, vorzugsweise von 12 mm bis 50 mm, weiter vorzugsweise von 16 mm bis 45 mm, aufweist.

Es ist dann möglich, die Zähnezahl dem Durchmesser entsprechend anzupassen. Hier und vorzugsweise liegt die Zähnezahl zwischen vier und sechs. Es ist jedoch auch möglich eine andere Zähnezahl vorzusehen.

### Bezugszeichenliste

- 1: Bohrkrone
- 2: Armierungseisen
- 3: Schaftabschnitt
- 4: Tragkörper
- A: geometrische Bohrkronenachse
- U: Umfangsrichtung
- 5: Stirnseite
- 6: Meißelzahn
- 7: erste Meißelkante
- 8: zweite Meißelkante
- 9: Drehrichtung
- G: Meißelkantengerade
- 10: Meißelflächen
- 11: erste Meißelebene
- 12: zweite Meißelebene
- 13: Vorderflanke
- 14: Hinterflanke
- 15: Trägerstirnfläche
- H: Überstand
- Q: Quererstreckung
- 17: Zahninnenseite
- 18: Zahnaußenseite
- 19: Fußseite
- 20: Zahnaufnahme
- 21: Auflagefläche
- 22: Gegenauflagefläche
- 23: Formschlusselement
- 24: Gegenformschlusselement
- 16: Abflachung

## Patentansprüche

1. Bohrkrone für einen dreh-hämmernden oder dreh-schlagenden Einsatz zum Durchtrennen von Armierungseisen (2) in Beton, wobei die Bohrkrone (1) einen im Wesentlichen hohlzylindrischen Tragkörper (4), der sich entlang einer geometrischen Bohrkronenachse (A) erstreckt, aufweist, wobei der Tragkörper (4) wenigstens einen Meißelzahn (6) mit einer sich im Wesentlichen radial erstreckenden ersten Meißelkante (7) aufweist,
**dadurch gekennzeichnet,**
**dass** die erste Meißelkante (7) in Umfangsrichtung (U) in einem mittleren Abschnitt, insbesondere genau mittig, des Meißelzahns (6) angeordnet ist und dass der Meißelzahn (6) eine sich im Wesentlichen tangential zur Umfangsrichtung (U) der Bohrkrone (1) erstreckende zweite Meißelkante (8) aufweist.

2. Bohrkrone nach Anspruch 1, **dadurch gekennzeichnet, dass** die zweite Meißelkante (8) in radialer Richtung in einem mittleren Abschnitt, insbesondere genau mittig, des Meißelzahns (6) angeordnet ist, und/oder, dass sich die erste Meißelkante (7) entlang einer Meißelkantengerade (G) erstreckt, die durch die geometrische Bohrkronenachse (A) verläuft.

3. Bohrkrone nach einem der vorhergehenden Ansprüche, **dadurch gekennzeichnet, dass** die sich beidseitig an die erste Meißelkante (7) unmittelbar anschließenden Meißelflächen (10) und/oder Abschnitte der zweiten Meißelkante (8) zu einer sich durch die erste Meißelkante (7) und die geometrische Bohrkronenachse (A) erstreckenden ersten Meißelebene (11) jeweils einen Winkel in einer orthogonal zur ersten Meißelebene (11) angeordneten Ebene von 30° bis 45°, vorzugsweise von 35° bis 42,5°, weiter vorzugsweise von 37,5° bis 40°, ausbilden, und/oder,
dass die sich beidseitig an die zweite Meißelkante (8) unmittelbar anschließenden Meißelflächen (10) und/oder Abschnitte der ersten Meißelkante (7) zu einer sich durch die zweite Meißelkante (8) und parallel zur geometrische Bohrkronenachse (A) erstreckende zweite Meißelebene (12) jeweils einen Winkel in einer orthogonal zur zweiten Meißelebene (12) angeordneten Ebene von 50° bis 75°, vorzugsweise von 55° bis 70°, weiter vorzugsweise von 60° bis 65°, ausbilden.

4. Bohrkrone nach einem der vorhergehenden Ansprüche, **dadurch gekennzeichnet, dass** der Meißelzahn (6) eine sich im Wesentlichen parallel zur ersten Meißelebene (11) erstreckende, in Drehrichtung (9) der Bohrkrone (1) vorne angeordnete Vorderflanke (13) und eine sich im Wesentlichen parallel zur ersten Meißelebene (11) erstreckende, in Drehrichtung (9) der Bohrkrone (1) hinten angeordnete Hinterflanke (14) aufweist, dass der Tragkörper (4) eine im Wesentlichen senkrecht zur geometrischen Bohrkronenachse (A) angeordnete Trägerstirnfläche (15), gegenüber der der Meißelzahn (6) axial hervorsteht, aufweist, dass die Meißelflächen (10) in Drehrichtung (9) im Bereich der Vorderflanke (13) des Meißelzahns (6) und in Drehrichtung (9) im Bereich der Hinterflanke (14) des Meißelzahns (6) jeweils eine Abflachung (16) aufweisen, in der die Meißelflächen (10) derart abgeflacht sind, dass ein im Wesentlichen kontinuierlicher Übergang von den Meißelflächen (10) zur Trägerstirnfläche (15) ausgebildet ist.

5. Bohrkrone nach einem der vorhergehenden Ansprüche, **dadurch gekennzeichnet, dass** der Meißelzahn (6) des Zusammentreffens der ersten Meißelkante (7) und der zweiten Meißelkante (8) einen axialen Überstand (H) gegenüber der Trägerstirnfläche (15) von 1 mm bis 4 mm, vorzugsweise von 1,5 mm bis 3,5 mm, weiter vorzugsweise von 2 mm bis 3 mm, aufweist.

6. Bohrkrone nach einem der vorhergehenden Ansprüche, **dadurch gekennzeichnet, dass** der Meißelzahn (6) eine Quererstreckung (Q) in Verlaufsrichtung der ersten Meißelkante (7) aufweist, dass die Quererstreckung (Q) entlang der zweiten Meißelkante (8) variiert, und dass der Meißelzahn (6) seine größte Quererstreckung (Q) beabstandet von der Vorderflanke (13) aufweist, vorzugsweise, dass der Meißelzahn (6) seine größte Quererstreckung (Q) zwischen der ersten Meißelkante (7) und der Vorderflanke (13) aufweist, weiter vorzugsweise, dass die größte Quererstreckung (Q) einen ersten Abstand zur Vorderflanke (13) und einen zweiten Abstand zur ersten Meißelkante (7) aufweist und dass das Verhältnis des ersten Abstandes zum zweiten Abstand von 1:1 bis 1:8, vorzugsweise von 1:2 bis 1:7, weiter vorzugsweise von 1:3 bis 1:5, beträgt.

7. Bohrkrone nach einem der vorhergehenden Ansprüche, **dadurch gekennzeichnet, dass** der Meißelzahn (6) den Tragkörper (4) wenigstens abschnittsweise im Bereich der größten Quererstreckung (Q) radial nach Innen und/oder radial nach außen überragt.

8. Bohrkrone nach einem der vorhergehenden Ansprüche, **dadurch gekennzeichnet, dass** sich die Quererstreckung (Q) des Meißelzahns (6) ausgehend von der größten Quererstreckung (Q) entlang der zweiten Meißelkante (8) zu der Vorderflanke (13) und zu der Hinterflanke (14) verringert, vorzugsweise, dass die Quererstreckung (Q) im Bereich der Vorderflanke (13) und/oder die Quererstreckung (Q) im Bereich der Hinterflanke (14) 98 % bis 85 %, vorzugsweise 96 % bis 80 %, weiter vorzugsweise 94 % bis 85 %, der größten Quererstreckung (Q) entspricht.

9. Bohrkrone nach einem der vorhergehenden Ansprüche, **dadurch gekennzeichnet, dass** der Meißelzahn (6) eine in radialer Richtung der geometrischen Bohrkronenachse (A) zugewandte Zahninnenseite (17) und eine in radialer Richtung der geometrischen Bohrkronenachse (A) abgewandte Zahnaußenseite (18) aufweist, dass sich der Abstand zwischen der Zahninnenseite (17) und der Zahnaußenseite (18) ausgehend von der ersten Meißelkante (7) in axialer Richtung zu einem Fußabschnitt des Meißelzahns (6) verringert, oder dass der Abstand zwischen der Zahninnenseite (17) und der Zahnaußenseite (18) ausgehend von der ersten Meißelkante (7) in axialer Richtung zu einem Fußabschnitt des Meißelzahns (6) im Wesentlichen konstant bleibt.

10. Bohrkrone nach einem der vorhergehenden Ansprüche, **dadurch gekennzeichnet, dass** der Meißelzahn (6) im Rahmen einer Montage der Bohrkrone (1) in eine Zahnaufnahme (20) des Tragkörpers (4), insbesondere in axialer Richtung, einsteckbar ist, und/oder, dass der Meißelzahn (6) mit dem Tragkörper (4) zur Herstellung der Bohrkrone (1), insbesondere mittels Silberlöten und/oder Kupferlöten, verlötet ist.

11. Bohrkrone nach einem der vorhergehenden Ansprüche, **dadurch gekennzeichnet, dass** der Meißelzahn (6) wenigstens eine der ersten Meißelkante (7) und der zweiten Meißelkante (8) abgewandte Auflagefläche (21) aufweist, die im montierten Zustand der Bohrkrone (1) mit einer komplementär ausgebildeten Gegenauflagefläche (22) des Tragkörpers (4) in Eingriff steht, vorzugsweise, dass die Auflagefläche (21) flach ausgebildet ist, oder, dass die Auflagefläche (21) konvex ausgebildet ist, weiter vorzugsweise, dass die Auflagefläche (21) im Wesentlichen halbkreisförmig ausgebildet ist.

12. Bohrkrone nach einem der vorhergehenden Ansprüche, **dadurch gekennzeichnet, dass** der Meißelzahn (6) wenigstens ein Formschlusselement (23) aufweist, das derart mit einem Gegenformschlusselement (24) des Tragkörpers (4) in formschlüssigen Eingriff gebracht ist, dass der Meißelzahn (6) radialfest am Tragkörper (4) gehalten ist, vorzugsweise, dass der Meißelzahn (6) zwei Formschlusselemente (23) aufweist, die jeweils derart mit einem Gegenformschlusselement (24) des Tragkörpers (4) in formschlüssigen Eingriff gebracht sind, dass der Meißelzahn (6) radialfest am Tragkörper (4) gehalten ist, weiter vorzugsweise, dass jeweils ein Formschlusselement (23) im Bereich der Vorderflanke (13) und im Bereich der Hinterflanke (14) des Meißelzahns (6) angeordnet ist.

13. Bohrkrone nach einem der vorhergehenden Ansprüche, **dadurch gekennzeichnet, dass** die Zahnaufnahme (20) mittels eines spanenden Verfahrens in die Bohrkrone (1) eingebracht ist, vorzugsweise, dass die Zahnaufnahme (20) mittels Fräsen in die Bohrkrone (1) eingebracht ist, weiter vorzugsweise, dass das Einbringen der Zahnaufnahme (20) in die Bohrkrone (1) in radialer und/oder tangentialer Richtung erfolgt ist, oder, dass das Einbringen der Zahnaufnahme (20) in die Bohrkrone (1) ausschließlich in axialer Richtung erfolgt ist.

14. Bohrkrone nach einem der vorhergehenden Ansprüche, **dadurch gekennzeichnet, dass** die Bohrkrone (1) an ihrem Außenumfang eine tangentiale Kontrollfläche (25) aufweist, und dass die Kontrollfläche (25) die Zahnaufnahme (20) wenigstens abschnittsweise in radialer Richtung begrenzt.

15. Bohrkrone nach einem der vorhergehenden Ansprüche, **dadurch gekennzeichnet, dass** die Bohrkrone (1) einen Durchmesser von 10 mm bis 60 mm, vorzugsweise von 12 mm bis 50 mm, weiter vorzugsweise von 16 mm bis 45 mm, aufweist.
